# EUROPÄISCHE PATENTSCHRIFT

(11) **EP 2 942 113 B1**
(45) Veröffentlichungstag und Bekanntmachung des Hinweises auf die Patenterteilung: **12.08.2020**
(21) Anmeldenummer: 14167418.4
(22) Anmeldetag: 07.05.2014
(51) Int. Cl.: B07B 13/16, B65D 90/62, G01G 23/00

(54) **Entnahmeeinrichtung für einen Auffangbehälter**
Withdrawal device for a collecting vessel
Dispositif de prélèvement pour un collecteur

(43) Veröffentlichungstag der Anmeldung: 11.11.2015
(73) Patentinhaber: Mettler-Toledo Garvens GmbH, 31180 Giesen (DE)
(72) Erfinder: Schwanitz, Florian, 31036 Eime (DE)
(74) Vertreter: Mettler-Toledo

(56) Entgegenhaltungen:
- EP-A1- 1 416 256
- EP-A1- 1 598 289
- DE-A1-102004 032 052
- US-A- 814 563
- US-A- 1 162 146
- US-A- 5 361 978
- US-A- 5 540 012
- US-A1- 2004 130 247
- US-B1- 6 202 922

## Beschreibung

Die Erfindung betrifft eine Vorrichtung zum Entleeren eines Auffangbehälters für eine Aussortieranlage zur Speicherung aussortierter Gegenstände an einem Produktkontrollsystem, insbesondere einer Kontrollwaage und/oder eines Metalldetektionssystems und/oder eines Inspektionsgeräts basierend auf elektromagnetischer Strahlung.

In der Herstellung von pharmazeutischen oder kosmetischen Produkten, Lebensmitteln, Getränken sowie in der Logistik-, chemischen, Automobilzuliefer-, und der metallverarbeitenden Industrie sind Kontrollwaagen ein Schlüsselelement der Qualitätssicherung. Sie verbessern nicht nur die Ausschöpfung der vorhandenen Ressourcen, sondern helfen auch nationale Verordnungen, Eichvorschriften und Industrienormen zu erfüllen. Ein effektives Kontrollwägesystem bietet Schutz gegen Produktfehler und senkt die Gesamtbetriebskosten.

Eine dynamische Kontrollwaage ist ein System, das Wägegüter verwiegt, während sie innerhalb einer Produktionslinie über die Waage geführt werden, die Wägegüter in vorgegebene Gewichtszonen klassiert und die Wägegüter entsprechend der Gewichtsklassierung sortiert oder ausschleust. Einsatzgebiete von Kontrollwaagen sind vielseitig und umfassen zum Beispiel:
- Prüfung auf Unter- bzw. Übergewicht von Produkten
- Einhaltung der gesetzlichen Bestimmungen für den Nettoinhalt von verpackten Gütern
- Reduzierung von Produktverschwendungen durch Verwendung der mittels der Kontrollwaage gewonnenen Gewichtswerte zur Einstellung der Füllmaschinen
- Klassierung von Produkten nach Gewicht
- Messung und Aufzeichnung der Leistung der Produktionsanlage bzw. -linie
- Stückzahl-Verifizierung anhand des Gewichts
   Mit Kontrollwaagen werden 100% der Produkte einer Produktlinie gewogen. So werden dann auch die gesamten Produktionsdaten gesammelt für Produktzählung, Chargennachverfolgung oder für die Produktionsstatistik.

Ein Kontrollwägesystem besteht üblicherweise aus Zuführband, Wägeband, Abführband mit Sortiereinrichtung und Wägeterminal mit Benutzerschnittstelle. Das zwischen Zu- und Abführband gelegene Wägeband ist üblicherweise auf einer Wägezelle gelagert, welche das Gewicht des Produkts beim Überfahren des Wägebandes dynamisch erfasst. Die zwei am häufigsten verwendeten Wägetechnologien für Kontrollwaagen sind Wägezellen mit Dehnungsmessstreifen (DMS) oder nach dem Prinzip der elektromagnetischen Kraftkompensation (EMFR) arbeitende Wägezellen. Nach ihrem Transport über das Wägeband werden die Produkte von einem dem Wägeband nachgeschalteten Abführband abtransportiert. Durch die dynamische Wägung werden fehlgewichtige Produkte erkannt und von einer Sortiervorrichtung in der Regel quer zu dem in der Längsrichtung stattfindenden Transport der Produkte ausgestossen.

Ebenso wie Kontrollwaagen gehören auch Metalldetektoren zu den Schlüsselkomponenten für eine effektive Qualitätssicherung. Der Einsatz von Metalldetektoren wird von gewerblichen Nutzern für die Suche nach Produktverunreinigungen eingesetzt, beispielsweise für die Suche nach Bleikugeln in Fleisch, Drahtteilen in Getreide, Spänen aufgrund von Reparaturen an der Produktionsanlage oder sonstigen Verunreinigungen aus der Produktverarbeitung.

Bei einem industriellen Metalldetektionssystem handelt es sich um ein hoch entwickeltes Gerät, mit dem metallische Fremdkörper erkannt und aussortiert werden können. Die Detektierbarkeit schliesst eisenhaltige Metalle, auch Edelstähle und nichteisenhaltige Metalle, wie Messing, Kupfer, Aluminium und Blei, ein. Ein typisches Metalldetektionssystem besteht aus folgenden vier Hauptkomponenten: Suchkopf, Transportsystem, Bedieneinheit und automatische Sortiereinheit. Der Suchkopf besteht dabei aus meist mehreren elektromagnetischen Spulen, welche zur Detektion hochfrequente elektromagnetische Felder erzeugen bzw. empfangen.

Eine automatisierte Sortiereinheit hat die Aufgabe jene Produkte aus dem Produktestrom auszusortieren, welche bei einer vorgängigen Produkteprüfung die vom Benutzer festgelegten Qualitätsmerkmale nicht erfüllten. Die Aussortierung kann auf verschiedenste Arten erfolgen und ist auch vom auszusortierenden Produkt abhängig. Leichte Produkte, wie zum Beispiel Siegelrandbeutel, können durch einen Luftstoss aus einer Luftdüse aus dem Produktestrom entfernt werden. Viel häufiger wird jedoch das fehlerhafte Produkt durch eine Ausstosseinheit entfernt, welche mechanisch durch einen Kolbenzylinder oder mittels eines Elektromotors angetrieben wird.

Das vom originären Produktestrom ausgeschiedene Produkt gelangt dann entweder auf eine weitere Förderstrasse und wird vom Produktstrom entfernt, oder wird direkt beim Produktstrom in einen Auffangbehälter befördert. Im Auffangbehälter sammeln sich demnach alle fehlerhaften Produkte eines Kontrollsystems. Der Betreiber des Kontrollsystems hat nun die Möglichkeit die Produkte auf deren Fehler genauer zu kontrollieren, indem er diese Produkte dem Auffangbehälter entnimmt.

In DE 3 333 316 A1 ist ein Altrohstoffsammelbehälter zur besseren Altrohstoffsammlung mit einer Kipplade und einem Deckel gezeigt. Die Kipplade wird mittels zwei eine Drehachse bildende Drehzapfen in die bodennahe Führung eingeführt. Zwei Stifte begrenzen als Ausschwenkanschlag das Ausschwenken der Kipplade. Diese Ausführung eines Behälters ist nicht geeignet für die Verwendung als Auffangbehälter an einer Aussortieranlage, denn die Entnahme der sich im Inneren befindlichen Gegenstände erfolgt durch die gleiche Öffnung wie die Zufuhr. Hinzu kommt, dass der Behälter nicht dafür ausgelegt ist während einer Entnahme weitere aussortierte Gegenstände aufzunehmen. An einer automatisierten Produktionsanlage mit einer Aussortieranlage ist dies zwingend nötig, da sonst die Aussortierung unterbrochen werden müsste.

Weitere Abfallbehälter mit einer Einlassöffnung und einer separaten Entnahmeeinrichtung sind aus der US 6,202,922 B1, der US 5,361,978 A, und der US 814,563 A bekannt. Alle Abfallbehälter haben gemeinsam, dass die jeweilige Entnahmeeinrichtung in nur zwei Positionen verharren kann, nämlich in der geschlossenen und der vollständig geöffneten Position.

DE 10 2004 032 052 A1 offenbart einen Transportbehälter, welcher von oben durch die Deckelöffnung mit Tabak befüllt und bei Erreichen seines Bestimmungsortes durch die Bodenöffnung entleert wird. Die Bodenöffnung ist durch einen in einer Führungseinrichtung schiebbar geführten Riegel schliess- und öffenbar.

In US 2004 130 247 A1 ist ein Kipporganisator gezeigt mit einem Basisabschnitt und einem Versorgungsabschnitt, der beweglich mit dem Basisabschnitt verbunden ist. Der Basisabschnitt ist eine einzelne Einheit, die keine beweglichen Teile hat und mindestens eine Seitenwand mit einer darin ausgebildeten Nut aufweist. Der Zuführabschnitt ist eine einzelne Einheit, die keine beweglichen Teile aufweist und eine Vielzahl von darin zur Lagerung ausgebildeten Abteilen und einen Arm aufweist, der in einer äußeren Seitenwand zum beweglichen Eingriff mit der Nut ausgebildet ist. Wenn sich der Arm in der Nut bewegt, bewegt sich der Zufuhrabschnitt innerhalb des Basisabschnitts. Der Zufuhrabschnitt kann sich vom Basisabschnitt erstrecken und neigen, um eine aktuelle Ansicht und einen Zugang zu den Abteilen zu bieten.

Ein von der Anmelderin bereits vertriebener Auffangbehälter für eine Montage an einer Aussortieranlage weist auf Höhe des Abführbandes eine Einlassöffnung auf und eine dem Untergrund nähere Entnahmeeinrichtung auf. Die Entnahmeeinrichtung ist durch eine nach unten schwenkbare Klappe realisiert. Dabei kann die Klappe zwei Positionen einnehmen: Eine in welcher der Auffangbehälter geschlossen ist und eine in welcher der gesamte Inhalt des Auffangbehälters entleert werden kann. Es hat sich gezeigt, dass eine Einzelentnahme eines aussortierten Gegenstandes sich schwierig gestaltet, da die Klappe nach der Öffnung nach unten abschwenkt und alle im Inneren befindlichen Gegenstände herausfallen können.

Aufgabe der Erfindung ist es, einen Auffangbehälter für eine Aussortieranlage zu schaffen bei welchem eine Einzelentnahme auf einfache Art und Weise möglich ist, d.h. die Handhabung zur Entnahme soll bevorzugt einhändig erfolgen.

Weiter soll es möglich sein, dass die Aussortieranlage während der Entnahme nicht gestoppt werden muss und weitere Gegenstände, welche aussortiert werden sollen in den Auffangbehälter gefördert werden können.

Die Aufgabe wird dadurch gelöst, dass der Auffangbehälter für eine Aussortieranlage zur Lagerung aussortierter Gegenstände eine für die Zuführung aussortierter Gegenstände in das Innere des Auffangbehälters ausgebildete Einlassöffnung und eine für die Entnahme eines oder mehrerer aussortierter Gegenstände aus dem Inneren des Auffangbehälters ausgebildete und in der Regel unterhalb der Einlassöffnung angeordnete Entnahmeeinrichtung aufweist. Die Entnahmeeinrichtung weist eine Klappe auf, welche um eine Drehachse drehbar gelagert ist. Weiter weist die Entnahmeeinrichtung zwei seitlich an der Klappe angebrachte Seitenwände auf.

Die Erfindung ist durch den Gegenstand des unabhängigen Anspruchs 1 und der abhängigen Ansprüche 2-12 gekennzeichnet, wobei der Auffangbehälter eine Führungseinrichtung, mit mindestens einer Führungsbahn und mindestens einen im Betrieb des Auffangbehälters in die Führungsbahn eingreifenden Bolzen, aufweist. Dabei ist die Führungsbahn entweder an einer Seitenwand der Klappe oder an der Seite des Auffangbehälters und der Bolzen entsprechend gegenüberliegend an der Seite des Auffangbehälters oder an der Seitenwand der Klappe angeordnet.

Wobei die Führungsbahn zwei Endpositionen und mindestens eine zwischen den Endpositionen liegende Zwischenposition aufweist, wobei der Bolzen als Rastbolzen ausgebildet ist und jeweils an der Zwischenposition beziehungsweise an beiden Endpositionen einrastbar ist.

Durch die Zwischenposition ist es möglich die Klappe des Auffangbehälters in einer halboffenen Position zu belassen um aussortierte Gegenstände einzeln aus dem Auffangbehälter zu entnehmen. Ein weiterer Vorteil dabei ist, dass dies mit nur einer Hand gemacht werden kann.

Eine vorteilhafte Weiterbildung der Erfindung sieht vor, dass die Führungsbahn kreissegmentförmig ist, wobei die Drehachse den Kreismittelpunkt bildet.

Eine weitere Ausgestaltung der Erfindung sieht vor, dass die Rastbolzen durch ein Federelement vorgespannt in die Führungsbahn hineingedrückt werden.

Eine weitere vorteilhafte Ausgestaltung der Erfindung sieht vor, dass die Führungsbahn als Sacklochnut ausgebildet ist und die Rastpunkte der Führungsbahn jeweils als Vertiefung in der Sacklochnut ausgebildet sind.

In einer bevorzugten Ausführungsform der Erfindung ist die Führungsbahn als eine durch die Dicke der Seitenwand durchgehende Durchgangsnut ausgebildet und die Rastpunkte der Führungsbahn sind als Durchgangsloch ausgebildet, wobei der Durchmesser des Durchgangslochs grösser ist als die Breite der Durchgangsnut.

In einer weiteren bevorzugten Ausführungsform der Erfindung lässt sich die Drehachse rechtwinklig zu sich selbst linear verschieben. Die Führungsbahn weist ein erstes Kreissegment und ein zweites Kreissegment auf, welche miteinander verbunden sind und unterschiedliche Radien aufweisen, wobei die Drehachse den Mittelpunkt des ersten Kreissegments und des zweiten Kreissegments bildet, und der Bolzen als Führungsbolzen ausgebildet sind.

Ein Vorteil dieser Ausführungsform ist, dass dabei nur ein minimaler Verschleiss an dem Bolzen auftritt. Dies führt auch zu einer verminderten Geräuschentwicklung für eine in Bewegung befindliche Klappe.

Eine Weiterbildung einer Ausführungsform der Erfindung sieht vor, dass die Führungsbahn als eine durch die Dicke der Seitenwand der Klappe oder durch die Dicke der Seite des Auffangbehälters durchgehende Durchgangsnut ausgebildet ist.

Eine weitere Weiterbildung einer Ausführungsform der Erfindung sieht vor, dass sich die Drehachse rechtwinklig zu sich selbst linear um 10 - 15mm verschieben lässt, wobei sich zugleich der Führungsbolzen auf der Führungsbahn vom ersten Kreissegment auf das zweite Kreissegment verschiebt.

Eine weitere vorteilhafte Weiterbildung einer Ausführungsform der Erfindung sieht vor, dass die Drehachse als ein Scharnier ausgebildet ist, wobei der eine Scharnierschenkel mit der Klappe starr verbunden ist und der andere Scharnierschenkel mit dem Auffangbehälter durch mindestens zwei Langlöcher in deren Richtung linear verschiebbar verbunden ist.

In einer vorteilhaften Ausgestaltung beträgt der Winkel zwischen der Endposition in welcher die Entnahmeeinrichtung geschlossen ist und der mindestens einen Zwischenposition 40° - 70°.

In einer weiteren vorteilhaften Ausgestaltung beträgt der Winkel zwischen der mindestens einen Zwischenposition und der Endposition in welcher die Entnahmeeinrichtung geöffnet ist 60° - 90°.

In einer weiteren Ausgestaltung erstreckt sich die gesamte Führungsbahn über einen Winkel zwischen 100° - 160°.

In einer Inspektionsanlage insbesondere aufweisend eine Kontrollwaage und/oder ein Metalldetektionssystem und/oder ein Inspektionsgerät basierend auf elektromagnetischer Strahlung ist/sind ein oder mehrere Auffangbehälter vorhanden.

Einzelheiten des erfindungsgemässen Auffangbehälters ergeben sich anhand der Beschreibung der in den Zeichnungen dargestellten Ausführungsbeispiele. Es zeigen:
- Fig. 1: Auffangbehälter nach Stand der Technik in einer isometrischen Ansicht;
- Fig. 2: Auffangbehälter nach Stand der Technik als Seitenansicht aus Blickrichtung A gemäss Figur 1 auf die geschlossene Entnahmeeinrichtung eines Auffangbehälters nach Stand der Technik;
- Fig. 3: Auffangbehälter nach Stand der Technik als Seitenansicht aus Blickrichtung A gemäss Figur 1 auf die geöffnete Entnahmeeinrichtung eines Auffangbehälters nach Stand der Technik;
- Fig. 4: Seitliche Ansicht eines ersten Ausführungsbeispiels eines erfinderischen Auffangbehälters;
- Fig. 5: Einrastmechanismus des ersten Ausführungsbeispiels eines erfinderischen Auffangbehälters durch die Schnittlinie C-C aus Fig. 4;
- Fig. 6: Weitere Ausführungsmöglichkeit des Einrastmechanismus für ein erstes Ausführungsbeispiel eines erfinderischen Auffangbehälters;
- Fig. 7: Seitliche Ansicht eines zweiten Ausführungsbeispiels eines erfinderischen Auffangbehälters;
- Fig. 8: Einrastmechanismus des zweiten Ausführungsbeispiels eines erfinderischen Auffangbehälters gemäss Schnittansicht D-D aus Fig. 7
- Fig. 9: Isometrische Ansicht eines dritten Ausführungsbeispiels eines erfinderischen Auffangbehälters;
- Fig. 10: Seitenansicht des dritten Ausführungsbeispiels eines erfinderischen Auffangbehälters aus Blickrichtung B auf die geschlossene Entnahmeeinrichtung;
- Fig. 11: Seitenansicht des dritten Ausführungsbeispiels eines erfinderischen Auffangbehälters aus Blickrichtung B auf die geöffnete Entnahmeeinrichtung in einer Zwischenstellung, in welcher aussortierte Gegenstände einzeln entnehmbar sind;
- Fig. 12: Seitenansicht des dritten Ausführungsbeispiels eines erfinderischen Auffangbehälters aus Blickrichtung B auf die voll geöffnete Entnahmeeinrichtung.

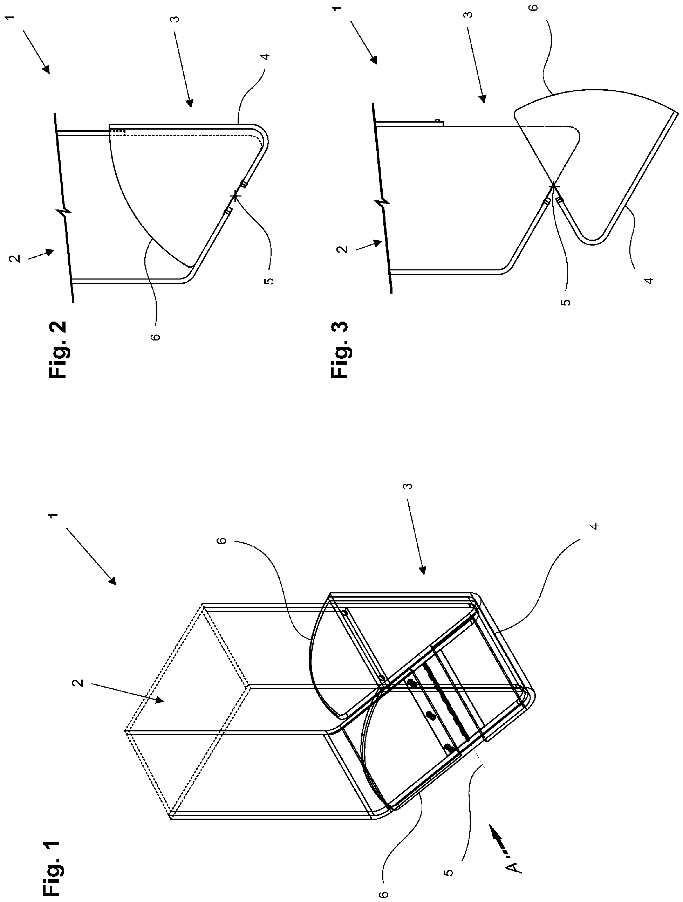

Figur 1 zeigt einen Auffangbehälter 1 für eine Aussortieranlage nach Stand der Technik mit einer Einlassöffung 2 und einer Entnahmeeinrichtung 3. Die aussortierten Gegenstände werden in das Innere des Auffangbehälters 1 befördert wo sie bis zur Entnahme durch den Benutzer der Aussortieranlage gelagert bzw. aufbewahrt werden. Die Entnahmeeinrichtung 3 weist eine Klappe 4 auf, welche durch ein Scharnier als Drehachse 5 drehbar gelagert ist und nach unten geschwenkt werden kann, um den Inhalt des Auffangbehälters 1 freizugeben. Zwei Seitenwände 6 dienen als bündigen Abschluss zur sicheren und gezielten Ausschüttung des Auffangbehälters 1. Die Seitenwände 6 der Klappe 4 könnten auch innenliegend sein, jedoch wäre dann ein Ablenkelement oberhalb der Seitenwände 6 der Klappe 4 nötig, damit die aussortierten Gegenstände bis nach unten fallen bzw. die Entnahmeeinrichtung 3 nicht verklemmen können.

Die angezeigte Blickrichtung in Figur 1 auf die Seite des Auffangbehälters 1 ist in Figur 2 dargestellt. Die Entnahmeeinrichtung 3 des Auffangbehälters 1 ist dabei in der geschlossenen Position. Die Drehachse 5 verläuft in Figur 2 senkrecht durch die Bildebene und ist durch ein Fadenkreuz gekennzeichnet. Das Scharnier ist einerseits am Auffangbehälter 1 und andererseits an der Klappe 4 angenietet. Nicht gezeigt in Figur 2 ist ein Verriegelungsmechanismus, welcher die Klappe 4 in der geschlossenen Position hält und verhindert, dass die Klappe 4 unbeabsichtigt nach unten schwenkt. Ein solcher Verriegelungsmechanismus kann sowohl ein einfacher Dreh- oder Schiebeknopf mit einer Verriegelungslasche sein, als auch ein Dreh- oder Schiebeschloss, welches zusätzlich den unbefugten Zugriff auf die aussortierten Gegenstände verhindert.

Die offene Entnahmeeinrichtung 3 des Auffangbehälters 1 nach Stand der Technik wird in Figur 3 gezeigt. Die Klappe 4 ist um die Drehachse 5 nach unten geschwenkt und gibt den Inhalt des Auffangbehälters 1 frei zur Entleerung. Da die Klappe frei nach unten in die offene Position schwenkt gestaltet sich eine Einzelentnahme von Gegenständen schwierig.

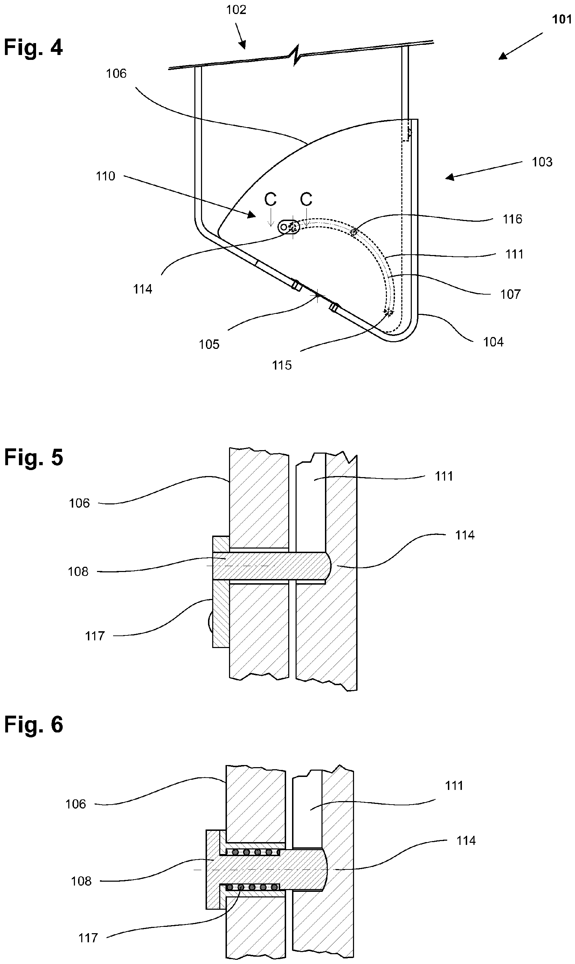

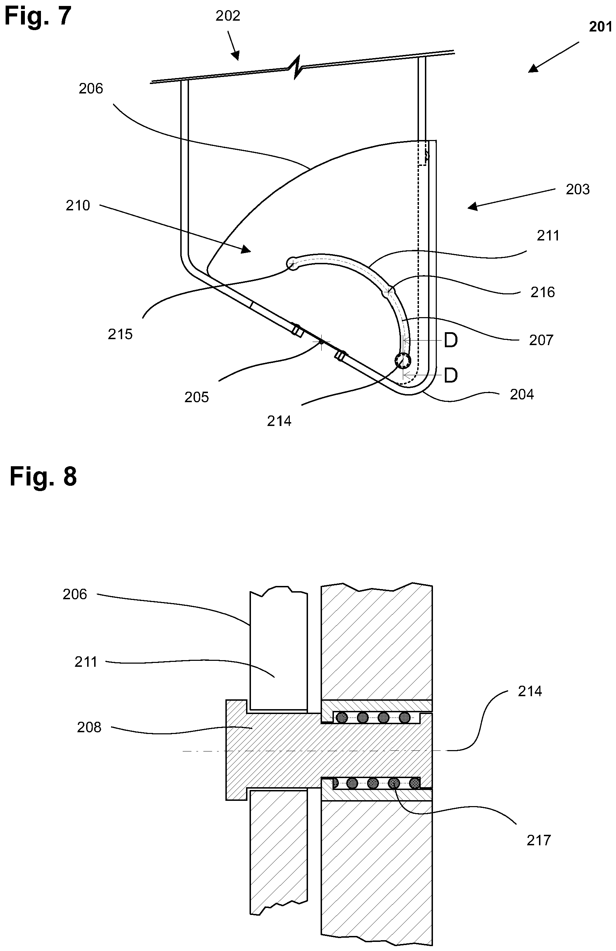

Figur 4 zeigt ein erstes Ausführungsbeispiel eines erfinderischen Auffangbehälters 101. Als Teil eines Führungselementes 110 ist eine Führungsbahn 107, in Figur 4 (und in den weiteren Figuren 7, 10, 11 und 12) als strichpunktierte Linie gezeichnet und als kreissegmentförmige Sacklochnut 111 in die dem Betrachter zugewandte Seite des Auffangbehälters 101 eingelassen. Das die Sacklochnut 111 beschreibende Kreissegment hat dabei den Kreismittelpunkt deckungsgleich mit der Drehachse 105. Auf der abgewandten Seite des Auffangbehälters 101 kann ebenso eine solche Sacklochnut 111 vorhanden sein. Ein durch ein Loch in der Seitenwand 106 hindurchgeführter Rastbolzen 108 (siehe Fig. 5 und 6) greift in diese Sacklochnut 111 ein und führt die Klappe 104 entlang der Führungsbahn 107. Die Befestigung des Rastbolzens 108 ist hier durch eine an der Seitenwand 106 angebrachte Lasche als Federelement 117 realisiert, wobei auch andere hier nicht weiter beschriebene Befestigungsarten des Rastbolzens 108 möglich wären. Entlang der Führungsbahn 107 sind zwei Endpositionen 114, 115 und eine Zwischenposition 116 vorhanden, welche jeweils als eine Vertiefung am Grund der Sacklochnut 111 ausgebildet sind.

Die Schnittansicht C-C aus Figur 4 wird in Figur 5 vergrössert dargestellt. Durch ein Durchgangsloch in der Seitenwand 106 ist der Rastbolzen 108 hindurchgeführt und greift in die Sacklochnut 111 ein und liegt in der Vertiefung am Grund der Sacklochnut 111, was zugleich der Endposition 114 bei geschlossener Entnahmeeinrichtung 103 entspricht. Wird nun die Klappe 104 nach unten geschwenkt bzw. die Entnahmeeinrichtung 103 geöffnet, so wird der Rastbolzen 108 auf der Vertiefung am Grund der Sacklochnut 111 gedrückt, verbiegt die Lasche, welche als Federelement 117 wirkt, und führt die Klappe 104 entlang der Führungsbahn 107 (nicht gezeigt).

In Figur 6 wird eine weitere Ausführungsmöglichkeit des Einrastmechanismus aus Figur 5 gezeigt. Der Rastbolzen 108 wird hierbei durch eine Spiralfeder als Federelement 117 an den Grund der Sacklochnut 111 gedrückt.

Figur 7 stellt eine zweite Ausführungsmöglichkeit des erfinderischen Auffangbehälters 201 dar. Die Führungsbahn 207 ist dabei als Durchgangsnut 211 an der Seitenwand 206 der Klappe 204 angebracht. Der fix an der Seitenwand des Auffangbehälters 201 angebrachte Rastbolzen 208 hält die Klappe 204 in der Endposition 214 in welcher die Entnahmeeinrichtung 203 geschlossen ist.

Der Einrastmechanismus zu dem in Figur 7 gezeigten zweiten Ausführungsbeispiels ist in Figur 8 vergrössert dargestellt. Durch den grösseren Durchmesser der Kopfpartie des Rastbolzens 208, passend zu einem Durchgangsloch, welches einen grösseren Durchmesser aufweist als die Breite der Durchgangsnut 211 wird die Klappe 204 formschlüssig in der Endposition 215 gehalten. Entriegelt wird der Rastbolzen 208 indem man diesen herauszieht (in Figur 8 aus Sicht des Betrachters, nach links). Das Federelement 217, hier als Spiralfeder dargestellt, wird dabei zusammengedrückt und vorgespannt. Die schmälere Halspartie des Rastbolzens 208 ist dabei so dimensioniert, dass der Rastbolzen 208 frei entlang der Durchgangsnut 211 geführt werden kann.

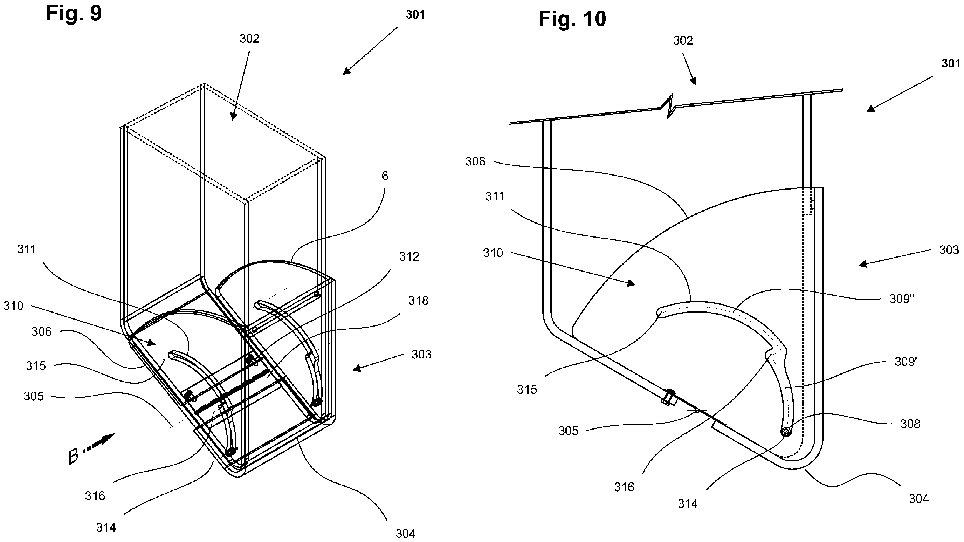

Ein drittes Ausführungsbeispiel eines erfinderischen Auffangbehälters 301 ist in isometrischer Ansicht in Figur 9 gezeigt. Das Scharnier 318 verbindet den Auffangbehälter 301 mit der Klappe 304, und bildet zugleich die Drehachse 305. Der eine Scharnierschenkel des Scharniers 318 ist mit der Klappe 304 starr verbunden, und der andere Scharnierschenkel ist mit dem Auffangbehälter 301 durch zwei Langlöcher 312 in deren Längsrichtung linear verschiebbar verbunden.

Die Figur 10 stellt das dritte Ausführungsbeispiel eines erfinderischen Auffangbehälters 301 in der Seitenansicht aus Blickrichtung B (siehe Figur 9) bei geschlossener Entnahmeeinrichtung 303 dar. Die an mindestens eine Seitenwand 306 der Klappe 304 angebrachte Führungsbahn 307 ist in ein erstes Kreissegment 309' und ein zweites Kreissegment 309" aufgeteilt. Die Kreissegmente 309', 309" haben jeweils einen unterschiedlichen Radius, jedoch haben beide den selbigen Kreismittelpunkt, welcher zugleich die Drehachse 305 ist. Die als Durchgangsnut 311 ausgebildete Führungsbahn 307 ist durch die zweiteilige Segmentierung gekröpft bzw. abgestuft und somit miteinander verbunden.

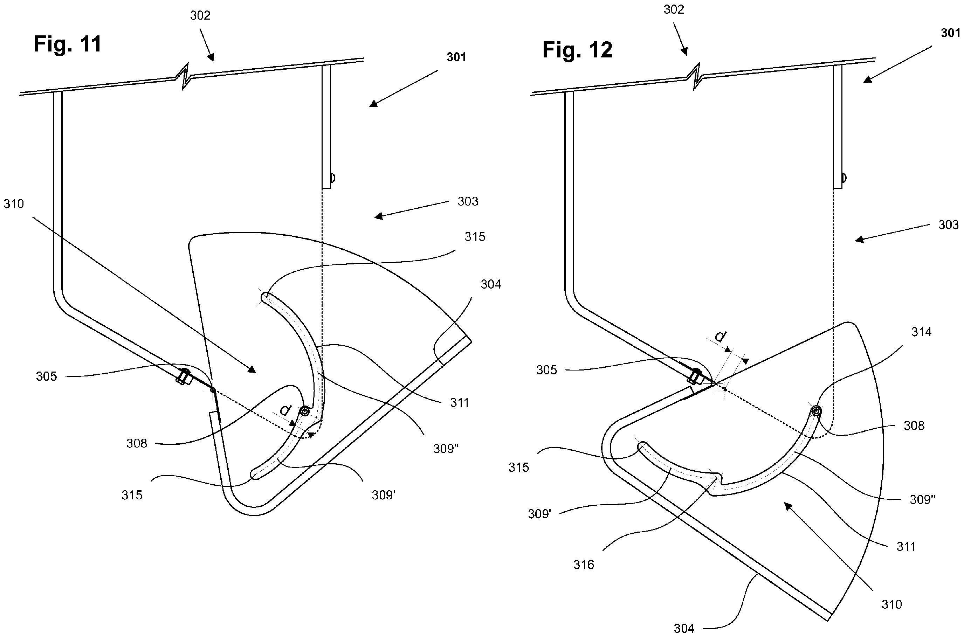

In Figur 11 ist das dritte Ausführungsbeispiel eines erfinderischen Auffangbehälters 301 in der Seitenansicht aus Blickrichtung B (siehe Figur 9) bei geöffneter Entnahmeeinrichtung 303 in einer Zwischenstellung, in welcher aussortierte Gegenstände einzeln entnehmbar sind, dargestellt. Der Führungsbolzen 308 befindet sich nun in der Zwischenposition 316. Durch den Versatz d, gebildet durch die zweiteilige Segmentierung der Führungsbahn 307, weist die Durchgangsnut 311 eine Auflageschulter auf, worauf die Klappe 304 in ihrer Position gehalten wird. Es kann nun in dieser Zwischenposition 316 auf einfache Weise ein oder mehrere aussortierte Gegenstände aus der Entnahmeeinrichtung 303 entnommen werden.

Um die Entnahmeeinrichtung 303 vollständig zu öffnen, wie es in Figur 12 gezeigt ist, wird das die Drehachse 305 bildende Scharnier 318 samt der Klappe 304 und den daran angebrachten Seitenwänden 306 um den Versatz d in Richtung der Langlöcher 312 (siehe Figur 9) verschoben. Der Führungsbolzen 308 gelangt auf die durch das zweite Kreissegment 309" gebildete Führungsbahn 307. Die Klappe 304 kann nun bis zur Endposition 315 weiter um die Drehachse 305 gedreht werden.

Soll die Klappe 304 an weiteren Positionen gehalten werden können, so ist die Führungsbahn 107, 207 mit zusätzlichen Zwischenpositionen auszustatten. Dies heisst im Falle des ersten Ausführungsbeispiels, dass weitere Vertiefungen am Grund der Sacklochnut 111 oder im Falle des zweiten Ausführungsbeispiels, dass weitere Durchgangslöcher geschaffen werden müssten. Im Falle der dritten Ausführungsform müssten der Führungsbahn 307 weitere Kreissegmente hinzugefügt werden.

In allen beschriebenen Ausführungsbeispielen des erfindungsgemässen Auffangbehälters 101, 201, 301 sind die Seitenwände 106, 206, 306 jeweils aussenliegend am Auffangbehälter 101, 201, 301 angebracht. Jede Ausführungsform kann aber auch mit innenliegenden Seitenwänden 106, 206, 306 ausgeführt werden. Dazu bedarf es lediglich einer kinematischen Umkehr der Funktionseinheiten des Führungselements 110, 210, 310.

Obwohl die Erfindung durch die Darstellung von mehreren spezifischen Ausführungsbeispielen beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Liste der Bezugszeichen

- 1, 101, 201, 301: Auffangbehälter
- 2, 102, 202, 302: Einlassöffnung
- 3, 103, 203, 303: Entnahmeeinrichtung
- 4, 104, 204, 304: Klappe
- 5,105, 205, 305: Drehachse
- 6, 106, 206, 306: Seitenwand
- 107,207,307: Führungsbahn
- 108, 208: Rastbolzen
- 308: Führungsbolzen
- 109, 209: Kreissegment
- 309': Erstes Kreissegment
- 309": Zweites Kreissegment
- 110, 210, 310: Führungseinrichtung
- 111,: Sacklochnut
- 211, 311: Durchgangsnut
- 312: Langloch
- 114, 214, 314: Endposition bei geschlossener Entnahmeeinrichtung (103, 203, 303)
- 115, 215, 315: Endposition bei geöffneter Entnahmeeinrichtung (103, 203, 303)
- 116, 216, 316: Zwischenposition
- 117, 217: Federelement
- 318: Scharnier

- d: Versatz

## Patentansprüche

1. Auffangbehälter (101, 201, 301) für eine Aussortieranlage zur Lagerung aussortierter Gegenstände aufweisend eine für die Zuführung aussortierter Gegenstände in das Innere des Auffangbehälters (101, 201, 301) ausgebildete Einlassöffnung (102, 202, 302) und eine für die Entnahme eines oder mehrerer aussortierter Gegenstände aus dem Inneren des Auffangbehälters (101, 201, 301) ausgebildete Entnahmeeinrichtung (103, 203, 303) aufweisend eine Klappe (104, 204, 304), welche um eine Drehachse (105, 205, 305) drehbar gelagert ist, und zwei seitlich an der Klappe (104, 204, 304) angebrachte Seitenwände (106, 206, 306)
**dadurch gekennzeichnet, dass**
der Auffangbehälter (101, 201) eine Führungseinrichtung (110, 210), mit mindestens einer Führungsbahn (107, 207) und mindestens einen im Betrieb des Auffangbehälters (101, 201) in die Führungsbahn (107, 207) eingreifenden Bolzen (108, 208) aufweist, wobei die Führungsbahn (107, 207) entweder an einer Seitenwand (6) der Klappe (104, 204) oder an der Seite des Auffangbehälters (101, 201) und der Bolzen (108, 208) entsprechend gegenüberliegend an der Seite des Auffangbehälters (101, 201) oder an der Seitenwand (106, 206) der Klappe (104, 204) angeordnet ist, und
dass die Führungsbahn (107, 207) zwei Endpositionen (114, 115, 214, 215) und mindestens eine zwischen den Endpositionen (114, 115, 214, 215) liegende Zwischenposition (116, 216) aufweist, welche jeweils als eine Vertiefung am Grund der Führungsbahn (107) oder die als Durchgangslöcher ausgebildet sind, wobei der jeweilige Durchmesser eines Durchgangslochs grösser ist als die Breite der Führungsbahn (207), **oder dass**
der Auffangbehälter (301) eine Führungseinrichtung (310), mit mindestens einer Führungsbahn (307) und mindestens einen im Betrieb des Auffangbehälters (301) in die Führungsbahn (307) eingreifenden Bolzen (108, 208, 308) aufweist, wobei die Führungsbahn (307) an einer Seitenwand (306) der Klappe (304) und der Bolzen (308) gegenüberliegend an der Seite des Auffangbehälters (301) angeordnet ist,
dass sich die Drehachse (305) rechtwinklig zu sich selbst linear verschieben lässt, und
dass die Führungsbahn (307) ein erstes Kreissegment (309') und ein zweites Kreissegment (309") aufweist, welche miteinander verbunden sind, dabei eine Zwischenposition (316) bilden und unterschiedliche Radien aufweisen, wobei die Drehachse (305) den Mittelpunkt des ersten Kreissegments (309') und des zweiten Kreissegments (309") bildet, und der Bolzen als Führungsbolzen (308) ausgebildet ist.

2. Auffangbehälter nach einem der Ansprüche 1 **dadurch gekennzeichnet, dass**
die Führungsbahn (107, 207) kreissegmentförmig ist, wobei die Drehachse (105, 205) den Kreismittelpunkt bildet.

3. Auffangbehälter nach einem der Ansprüche 1 oder 2 **dadurch gekennzeichnet, dass**
der Bolzen als Rastbolzen (108, 208) ausgebildet ist und jeweils an der Zwischenposition (116, 216) und an beiden Endpositionen (114, 115, 214, 215) einrastbar ist.

4. Auffangbehälter nach Anspruch 3 **dadurch gekennzeichnet, dass**
der Rastbolzen (108, 208) durch ein Federelement (117, 217) vorgespannt in die Führungsbahn (107, 207) hineingedrückt wird.

5. Auffangbehälter nach Anspruch 1 **dadurch gekennzeichnet, dass**
die Führungsbahn (207, 307) als eine durch die Dicke der Seitenwand (206, 306) der Klappe (204, 304) oder durch die Dicke der Seite des Auffangbehälters (201) durchgehende Durchgangsnut (211, 311) ausgebildet ist.

6. Auffangbehälter nach einem der Ansprüche 1 bis 5 **dadurch gekennzeichnet, dass**
die Führungsbahn (107, 307) als Sacklochnut (111) an der Seitenwand (106, 306) der Klappe (104, 304) oder an der Seite des Auffangbehälters (101) ausgebildet ist.

7. Auffangbehälter nach einem der Ansprüche 1, 5 oder 6 **dadurch gekennzeichnet, dass** sich die Drehachse (305) rechtwinklig zu sich selbst linear um 10 - 15mm verschieben lässt, wobei sich zugleich der Führungsbolzen (308) auf der Führungsbahn (307) vom ersten Kreissegment (309') auf das zweite Kreissegment (309") verschiebt.

8. Auffangbehälter nach einem der Ansprüche 1 oder 5 bis 7 **dadurch gekennzeichnet, dass**
die Drehachse (305) als ein Scharnier (318) ausgebildet ist, wobei der eine Scharnierschenkel mit der Klappe (304) starr verbunden ist und der andere Scharnierschenkel mit dem Auffangbehälter (301) durch mindestens zwei Langlöcher (312) in deren Längsrichtung linear verschiebbar verbunden ist.

9. Auffangbehälter nach einem der Ansprüche 2 bis 8 **dadurch gekennzeichnet, dass**
der Winkel zwischen der Endposition (114, 214, 314) in welcher die Entnahmeeinrichtung (103, 203, 303) geschlossen ist und der Position, in welcher sich der Bolzen (108, 208, 308) an der mindestens einen Zwischenposition (116, 216, 316) befindet 40° - 70° beträgt.

10. Auffangbehälter nach einem der Ansprüche 2 bis 9 **dadurch gekennzeichnet, dass**
der Winkel zwischen der Position, in welcher sich der Bolzen (108, 208, 308) an der mindestens einen Zwischenposition (116, 216, 316) befindet und der Endposition (115, 215, 315) in welcher die Entnahmeeinrichtung (103, 203, 303) vollständig geöffnet ist 60° - 90° beträgt.

11. Auffangbehälter nach einem der Ansprüche 1 bis 10 **dadurch gekennzeichnet, dass**
die gesamte Führungsbahn (107, 207, 307) sich über einen Winkel zwischen 100° - 160° erstreckt.

12. Inspektionsanlage insbesondere aufweisend eine Kontrollwaage und/oder ein Metalldetektionssystem und/oder ein Inspektionsgerät basierend auf elektromagnetischer Strahlung **dadurch gekennzeichnet, dass** ein oder mehrere Auffangbehälter (103, 203, 303) nach einem der vorhergehenden Ansprüche 1 bis 11 vorhanden ist/sind.

## Claims

1. A collecting container (101, 201, 301) for storing rejected objects in a sorting system, said collecting container (101, 201, 301) having an inlet opening (102, 202, 302) designed for feeding rejected objects into the interior of the collecting container (101, 201, 301), and a withdrawal device (103, 203, 303) designed for withdrawing one or more rejected objects from the interior of the collecting container (101, 201, 301), said withdrawal device (103, 203, 303) having a flap (104, 204, 304) supported rotatably about a rotational axis (105, 205, 305) and having two side walls (106, 206, 306) mounted on the side of the flap (104, 204, 304),
**characterized in that**
the collecting container (101, 201) has a guiding device (110, 210) with at least one guiding track (107, 207) and at least one bolt (108, 208) engaging with the guiding track (107, 207) during the operation of the collecting container (101, 201), wherein the guiding track (107, 207) is arranged either on a side wall (6) of the flap (104, 204) or on the side of the collecting container (101, 201) and the bolt (108, 208) is correspondingly arranged opposite either on the side of the collecting container (101, 201) or on the side wall (106, 206) of the flap (104, 204), and
**in that** the guiding track (107, 207) has two end positions (114, 115, 214, 215) and at least one intermediate position (116, 216) located between the end positions (114, 115, 214, 215), which are each designed as a recess at the bottom of the guiding track (107) or as a through-hole, wherein the respective diameter of a through-hole is greater than the width of the guiding track (207),
**or in that**
the collecting container (301) has a guiding device (310) with at least one guiding track (307) and at least one bolt (108, 208, 308) engaging with the guiding track (307) during the operation of the collecting container (301), wherein the guiding track (307) is arranged on a side wall (306) of the flap (304) and the bolt (308) is arranged opposite on the side of the collecting container (301),
**in that** the rotational axis (305) can be displaced linearly at a right angle to itself, and
**in that** the guiding track (307) has a first circular segment (309') and a second circular segment (309") which are connected to each other, therein forming an intermediate position (316) and having different radii, wherein the rotational axis (305) forms the center of the first circular segment (309') and the second circular segment (309"), and the bolt is designed as a guiding bolt (308).

2. The collecting container according to Claim 1, **characterized in that** the guiding track (107, 207) is in the shape of a circular segment, wherein the rotational axis (105, 205) forms the center of the circle.

3. The collecting container according to any one of Claims 1 or 2, **characterized in that** the bolt is designed as a locking bolt (108, 208) and can be locked at the intermediate position (116, 216) and at both end positions (114, 115, 214, 215), respectively.

4. The collecting container according to Claim 3, **characterized in that** the locking bolt (108, 208) is pre-tensioned by a spring element (117, 217) and is thus pushed into the guiding track (107, 207).

5. The collecting container according to Claim 1, **characterized in that** the guiding track (207, 307) is designed as a through groove (211, 311) extending through the thickness of the side wall (206, 306) of the flap (204, 304) or through the thickness of the side of the collecting container (201).

6. The collecting container according to any one of Claims 1 to 5, **characterized in that** the guiding track (107, 307) is designed as a blind groove (111) on the side wall (106, 306) of the flap (104, 304) or on the side of the collecting container (101).

7. The collecting container according to any one of Claims 1, 5 or 6, **characterized in that** the rotational axis (305) can be shifted linearly at a right angle to itself by 10-15 mm, wherein the guiding bolt (308) simultaneously is displaced from the first circular segment (309') to the second circular segment (309") on the guiding track (307).

8. The collecting container according to any one of Claims 1 or 5 to 7, **characterized in that** the rotational axis (305) is designed as a hinge (318), wherein one hinge leaf is rigidly connected to the flap (304) and the other hinge leaf is connected to the collecting container (301) by at least two slotted holes (312) such that it is linearly displaceable in their longitudinal direction.

9. The collecting container according to any one of Claims 2 to 8, **characterized in that** the angle between the end position (114, 214, 314) in which the withdrawal device (103, 203, 303) is closed and the position in which the bolt (108, 208, 308) is located at the at least one intermediate position (116, 216, 316), is 40°-70°.

10. The collecting container according to any one of Claims 2 to 9, **characterized in that** the angle between the position in which the bolt (108, 208, 308) is located at the at least one intermediate position (116, 216, 316) and the end position (115, 215, 315) in which the withdrawal device (103, 203, 303) is completely open, is 60°-90°.

11. The collecting container according to any one of Claims 1 to 10, **characterized in that** the entire guiding track (107, 207, 307) extends over an angle between 100°-160°.

12. An inspection system in particular having a checkweigher and/or a metal detection system and/or an inspection device based on electromagnetic radiation, **characterized in that** one or more collecting containers (103, 203, 303) according to anyone of the preceding Claims 1 to 11 is/are present.

## Revendications

1. Collecteur (101, 201, 301) pour un système de tri destiné stocker des objets triés, comportant une ouverture d'entrée (102, 202, 302) conçue pour introduire des objets triés à l'intérieur du collecteur (101, 201, 301) et un dispositif de prélèvement (103, 203, 303) pour retirer un ou plusieurs objets triés de l'intérieur du collecteur (101, 201, 301), le dispositif de prélèvement comportant un volet (104, 204, 304) qui est monté en rotation autour d'un axe de rotation (105, 205, 305) et deux parois latérales (106, 206, 306) fixées sur le côté du volet (104, 204, 304)
**caractérisé en ce que**
le collecteur (101, 201) comporte un dispositif de guidage (110, 210) doté d'au moins une voie de guidage (107, 207) et d'au moins un boulon (108, 208) venant en prise dans la voie de guidage (107, 207) pendant le fonctionnement du collecteur (101, 201), dans lequel la voie de guidage (107, 207) est disposée soit sur une paroi latérale (6) du volet (104, 204) soit sur le côté du collecteur (101, 201) et le boulon (108, 208) est disposé de manière correspondante à l'opposé sur le côté du collecteur (101, 201) ou sur la paroi latérale (106, 206) du volet (104, 204), et
**en ce que** la voie de guidage (107, 207) comporte deux positions d'extrémité (114, 115, 214, 215) et au moins une position intermédiaire (116, 216) située entre les positions d'extrémité (114, 115, 214, 215), dont chacune est conçue sous la forme d'une cavité au niveau du fond de la voie de guidage (107) ou sous la forme de trous traversants, dans lequel chaque diamètre d'un trou traversant est supérieur à la largeur de la voie de guidage (207),
**ou en ce que**
le collecteur (301) comporte un dispositif de guidage (310) doté d'au moins une voie de guidage (307) et d'au moins un boulon (108, 208, 308) venant en prise dans la voie de guidage (307) pendant le fonctionnement du collecteur (301), dans lequel la voie de guidage (307) est disposée sur une paroi latérale (306) du volet (304) et le boulon (308) est disposé de manière opposée sur le côté du collecteur (301),
**en ce que** l'axe de rotation (305) peut être déplacé linéairement perpendiculairement à lui-même, et
**en ce que** la voie de guidage (307) comporte un premier segment circulaire (309') et un second segment circulaire (309") qui sont reliés l'un à l'autre, qui forment ainsi une position intermédiaire (316) et possèdent des rayons différents, dans lequel l'axe de rotation (305) forme le centre du premier segment circulaire (309') et du second segment circulaire (309"), et le boulon est conçu comme un boulon de guidage (308).

2. Collecteur selon la revendication 1, **caractérisé en ce que** la voie de guidage (107, 207) a la forme d'un segment circulaire, dans lequel l'axe de rotation (105, 205) forme le centre du cercle.

3. Collecteur selon l'une des revendications 1 ou 2, **caractérisé en ce que** le boulon est conçu comme un boulon de verrouillage (108, 208) et peut être verrouillé en position intermédiaire (116, 216) et aux deux positions d'extrémité (114, 115, 214, 215).

4. Collecteur selon la revendication 3, **caractérisé en ce que** le boulon de verrouillage (108, 208) est enfoncé de manière précontrainte dans la voie de guidage (107, 207) par un élément ressort (117, 217).

5. Collecteur selon la revendication 1, **caractérisé en ce que** la voie de guidage (207, 307) est conçue comme une rainure traversante (211, 311) qui traverse l'épaisseur de la paroi latérale (206, 306) du volet (204, 304) ou l'épaisseur du côté du collecteur (201).

6. Collecteur selon l'une des revendications 1 à 5, **caractérisé en ce que** la voie de guidage (107, 307) est conçue comme une rainure de trou borgne (111) sur la paroi latérale (106, 306) du volet (104, 304) ou sur le côté du collecteur (101).

7. Collecteur selon l'une des revendications 1, 5 ou 6, **caractérisé en ce que** l'axe de rotation (305) peut être déplacé linéairement perpendiculairement à lui-même de 10 à 15 mm, dans lequel le boulon de guidage (308) se déplace simultanément sur la voie de guidage (307) du premier segment circulaire (309') au second segment circulaire (309").

8. Collecteur selon l'une des revendications 1 ou 5 à 7, **caractérisé en ce que** l'axe de rotation (305) est conçu comme une charnière (318), dans lequel l'une branche de charnière est reliée de manière rigide au volet (304) et l'autre branche de charnière est reliée au collecteur (301) de manière amovible linéairement dans le sens longitudinal par au moins deux trous allongés (312).

9. Collecteur selon l'une des revendications 2 à 8, **caractérisé en ce que**
l'angle entre la position d'extrémité (114, 214, 314) à laquelle le dispositif de prélèvement (103, 203, 303) est fermé et la position à laquelle le boulon (108, 208, 308) se trouve dans l'au moins une position intermédiaire (116, 216, 316) est de 40 °à 70 °.

10. Collecteur selon l'une des revendications 2 à 9, **caractérisé en ce que** l'angle entre la position à laquelle le boulon (108, 208, 308) se trouve dans l'au moins une position intermédiaire (116, 216, 316) et la position d'extrémité (115, 215, 315) à laquelle le dispositif de prélèvement (103, 203, 303) est entièrement ouvert, est de 60 °à 90 °.

11. Collecteur selon l'une des revendications 1 à 10, **caractérisé en ce que** la totalité de la voie de guidage (107, 207, 307) s'étend sur un angle compris entre 100 ° et 160 °.

12. Système d'inspection, comportant notamment une trieuse pondérale et/ou un système de détection de métaux et/ou un dispositif d'inspection à base de rayonnement électromagnétique, **caractérisé en ce qu'**un ou plusieurs collecteurs (103, 203, 303) selon l'une des revendications 1 à 11 précédentes est/sont présent(s).
